# EUROPEAN PATENT SPECIFICATION

(11) **EP 3 032 962 B1**
(45) Date of publication and mention of the grant of the patent: **10.07.2019**
(21) Application number: 14758640.8
(22) Date of filing: 01.09.2014
(51) Int. Cl.: A23L 2/54, C12C 11/11, A23L 2/52, C12C 5/02

(54) **IMPROVEMENTS IN OR RELATING TO CARBONATED BEVERAGES**
VERBESSERUNGEN AN ODER IN ZUSAMMENHANG MIT KOHLENSÄUREHALTIGEN GETRÄNKEN
AMÉLIORATIONS APPORTÉES OU SE RAPPORTANT À DES BOISSONS GAZÉIFIÉES

(30) Priority: 04.09.2013 GB 201315738
(43) Date of publication of application: 22.06.2016
(73) Proprietor: Thos. Bentley & Son Limited, Leeds, West Yorkshire LS18 5PU (GB)
(72) Inventor: STORY, John Michael, Leeds, Yorkshire LS18 5PU (GB); COX, Russell, Leeds, YorkshireLS18 5PU (GB); BENTLEY, Thomas James M., Leeds, Yorkshire LS18 5PU (GB)
(74) Representative: Appleyard Lees IP LLP
(86) International application number: PCT/GB2014/052644
(87) International publication number: WO 2015/033118

(56) References cited:
- WO-A1-2009/133391
- WO-A1-2014/170641
- JP-A- 2010 279 293
- JP-A- 2011 135 803
- US-A- 4 093 750
- US-A- 5 820 905
- US-A1- 2010 316 778

## Description

The present invention relates to improvements in or relating to carbonated beverages. In particular the present invention relates to the combating of foaming and control of carbon dioxide release from carbonated beverages, during their manufacture, and/or during filling of the beverages into containers, and/or during dispensing of the beverages.

By "foaming" herein we include the formation of an excessive and/or persistent foam head during filling or dispensing; and the spurting or gushing which may occur when a beverage container is opened.

By "filling" herein we mean filling of containers during manufacture, and thus include canning or bottling.

By "dispensing" or "pouring" herein we mean pouring of a beverage direct from a can or bottle (for example by a person in the home, or by a member of serving staff, for example a steward on an airline, or a bartender), as well as delivering from a mixer unit at home or a multimixer unit in a bar or restaurant.

Excessive foaming is a problem that has beset the food and drink industry for many years, and it is described at some length in NOSB TAP Review Compiled by OMRI on Glycerol Monooleate Processing (Sept 25, 2001).

According to the "NOSB Review", and the many documents it references, mechanical and physical means including heating, centrifuging, spraying and ultrasound have been proposed to combat foaming problems.

Chemical foam control agents have also been proposed or employed (Kouloheris, A.P., Encyclopaedia of Food Technology (1974) 427-432; Zotto, A.A., Food Control agents User's Handbook (1991) 236-241; Combs, C., Encyclopaedia of Food Science and Technology (2000) 844-846). Foam control agents disclosed therein include naturally occurring fats and oils, although reference is made to their effectiveness as foam control agents as being limited, due to their poor dispersability in oil/water emulsions. Other foam control agents disclosed in such references are glycerin, lecithin, silicon dioxide, silicones and glycerol monooleate. Use of glycerol monooleate is also discussed in the "NOSB Review".

As is well known, problems with foaming and/or spurting are particularly marked in carbonated soft drinks.

Problems with carbonated beverages may occur:
a) when a carbonated beverage undergoes manufacture, including filling, when substantial carbon dioxide loss is often unavoidable and when filling has to be slow to prevent problems of over foaming ("fobbing");
b) when a can or bottle containing a carbonated beverage spurts or gushes on being opened, perhaps having been agitated prior to dispensing, as occurs with cans or bottles dispensed by vending machines or shaken by being carried;
c) when simply pouring a carbonated beverage from a bottle or can into a glass or cup;
d) when carbon dioxide is lost quickly from a bottle of opened beverage;
e) when carbon dioxide is lost quickly from a glass of a poured beverage.

Minimising foaming during filling is especially important given its bottlenecking effect during plant operations and its consequent impact on cost, time and throughput volumes: "Containment and inhibition of foam is necessary in food processing for efficient operation of production equipment" ("NOSB Review").

WO 2008/065401 A1 discloses the use of a control agent comprising a polyoxyethylene sorbitan fatty acid ester or a polyethylene glycol fatty acid ester to reduce foaming of certain types of acidulated carbonated beverage. This document proposed that these control agents were the only classes of compounds that were effective in reducing foaming. However, this document did not describe control agents effective in carbonated beer and "energy" drinks.

It will be apparent that very substantial efforts have been made to counter the problems documented in the prior art of inefficiency in filling, undesirable effects on dispensing, such as spurting or gushing on opening a bottle or can, and excessive or persistent foaming in a glass or cup.

The commonly-observed problems of foaming when opening cans and bottles and pouring the carbonated beverages suggest that the problem persists, particularly in aspartame-containing carbonated "diet" or "lite" beverages. As documented in some of the prior art documents mentioned above there is a particular difficulty in achieving foam control in aspartame-containing carbonated beverages.

A further problem associated with excessive foaming is excessive loss of carbon dioxide, and/or other gas(es), if present, during filling. This is inefficient, particularly considering the energy required to produce bottled carbon dioxide; and also involves the undesirable release of carbon dioxide into the environment. It would be desirable if this problem could be eased.

A yet further problem is the loss of "fizz" of carbonated beverages, when poured from a container into a drinking vessel. If excessive gas is lost from the beverage there may be a marked deterioration in its drinking quality. A related problem is that the beverage left in the container (for example a reclosable bottle) may quickly lose its drinking quality or "fizz" due to the loss of carbon dioxide from the beverage. This problem of loss of carbon dioxide from a beverage in a closed container is particularly evident in containers which have been opened by a consumer and part of the beverage has been removed. Beverages in such part-filled containers lose carbon dioxide relatively quickly. The problem of carbon dioxide loss is also evident with substantially full containers when the container has not yet been opened by a consumer. Beverages in such substantially full containers can slowly lose carbon dioxide through the walls of the container when the container is made from polyethylene terephthalate, for example. This carbon dioxide loss shortens the "shelf life" of the carbonated beverage.

Furthermore, a carbonated beverage left in an open drinking vessel may quickly lose its drinking quality or "fizz". A technical measure which solves or reduces this problem of drinking quality, related to foaming and/or retention of carbon dioxide, could be of high value.

There is a need for foam control in beer, and a particular need to control foaming in beer during filling of containers. The overall filling process is significantly retarded by the time it takes for a foam to collapse before filling may continue to the required volume. A solution to this problem will thus improve the throughput of beer through filling stations in the manufacturing process.

A further problem associated with excessive foaming is excessive loss of carbon dioxide during filling. It is undesirable, from a product quality, efficiency and environmental viewpoint, to release carbon dioxide into the environment. However some breweries have sought to recover carbon dioxide from the fermentation process and use it to carbonate the beer.

A yet further problem is the loss of the contribution to taste provided by carbon dioxide, particularly in respect of more highly carbonated beers such as lagers. If excessive carbon dioxide is lost from the beer there may be a marked deterioration in its drinking quality.

A technical measure which solves or reduces one or more of the problems described herein could be of high value.

US 3,751,263 describes the use of antifoaming agents introduced during boiling, aeration, and fermentation of the wort in brewery processes. To this end, silicone antifoaming agents are used, but are removed prior to the beer being packaged, thus restoring the foaming properties to the beer.

In the rare circumstances where antifoaming agents are introduced to remain within the beer after packaging, such antifoaming agents have generally been derived from hop extracts. Such hop extracts are only partially effective in foam control, and furthermore often affect the taste of the beer unfavourably in the quantities required for effective foam control. In addition, such hop extracts typically require the inclusion of emulsifying agents to render the hop extracts soluble. This cocktail of ingredients is undesirable both in terms of the complexity of the manufacturing process and the resulting flavour of the beer.

Hop extracts produce particularly unpleasant odours and flavours when exposed to light, even when emulsified with an emulsifying agent, albeit this effect is then somewhat reduced.

JP 2011135803 discloses a drinking foaming agent which is produced by adding a polyglycerol fatty acid ester to a sparkling beverage at a concentration 0.025-5 times a critical micelle concentration, for example penta-, hexa- and deca-monomyristate.

In accordance with a first aspect of the present invention there is provided an artificially carbonated beverage containing a foam control agent and/or carbon dioxide control agent, wherein the control agent is a polyglycerol fatty acid ester mixture which is the esterification reaction product of:
a) a triglyceride, and
b) a polyhydric alcohol which comprises:
   b1) a polyglycerol having at least 3 glycerol units, comprising triglycerol, 25-50 %wt, tetraglycerol, 25-50 %wt, higher polyglycerols, 15-40 %wt and other compounds, not more than 20 %wt; wherein the compound tetraglycerol is present in the polyglycerol component b1) in a higher amount by weight than the compound pentaglycerol, and
   b2) glycerol liberated from the triglyceride in the esterification reaction;
   wherein the molar ratio of component b1) to component a) in the esterification reaction mixture, based on average molecular weights, is 1 - 4 to 1;
   wherein the esterification reaction is carried out under alkaline conditions at a temperature of at least 150 °C; and
   wherein the control agent is present in the beverage in an amount of up to 20 mg/l.

The addition of such polyglycerol fatty acid ester mixtures has a remarkable effect in relation to foam control, when a carbonated beverage is delivered to a vessel, whether the vessel be a can or bottle in a filling plant, or a drinking vessel such as a glass or cup. Foaming is significantly reduced. It appears to be the case with many beverages that excessive foaming is inhibited, and any foam head which is produced is more coarse and collapses more quickly. Consequently there arise the advantages, that less carbon dioxide is lost into the atmosphere during filling (giving economic and environmental benefit); and less carbon dioxide escapes from the beverage when it is poured into a drinking vessel (thereby giving better drinking quality). A further advantage of using a polyglycerol fatty acid ester is that carbon dioxide appears to be retained for longer in the beverage in a container which has been opened. The familiar problem of bottled beverages going "flat" (or "losing their fizz") is thereby ameliorated.

Carbonation is provided artificially, i.e. by addition of carbon dioxide to the beverage or a beverage precursor. The addition can be to a non-carbonated beverage or beverage precursor or to a naturally carbonated beverage or beverage precursor, for example a fermented beverage or beverage precursor.

The beverage may be artificially carbonated heavily, as in the case of very fizzy beverages such as cola drinks, or may be artificially carbonated lightly.

Carbon dioxide may be the sole gas present or may be part of a gas mixture, for example carbon dioxide with a second gas, preferably an inert gas, for example nitrogen. A second gas is preferably less soluble, and preferably substantially insoluble, than carbon dioxide in the beverage. Preferably a second gas substantially does not undergo disproportionation or Ostwald ripening in the beverage.

The beverage is a carbonated beverage, and by virtue of carbon dioxide (forming carbonic acid in water) the beverage is acidic. However, the beverage may be acidulated. By the term "acidulated" we mean that it contains an additional acid of the type to be found in a "tangy" beverage. Examples may include phosphoric acid, and food acids (sometimes called "wholesome acids") such as citric acid, maleic acid, fumaric acid and tartaric acid. Fruit, fruit juices and fruit extracts contain food acids; and so beverages containing the same are acidulated.

Preferably the pH of the acidulated beverage is in the range from 2 to 6.9, preferably from 2.5 to 6, as measured by a standard pH meter at 23 °C used as recommended by the manufacturer.

The beverage may be water with gas, for example soda water or carbonated mineral water.

The beverage may be a flavoured water beverage.

The beverage may be alcoholic, typically having 3-9% wt/wt ethanol. Examples include beer (including lager), cider and so-called "alcopops", which are often carbonated blends of vodka or other spirits, with fruit flavourings. The beverage may be lightly alcoholic, typically having 0.1-3% wt/wt ethanol. Examples include shandy and certain fermented types of root beer, ginger beer and lemonade. By "beer" herein we mean any fermented starch beverage, especially any fermented malt beverage, including bitters, lagers, stouts, ales, wheat beers, Iambic beers, typically having an alcohol content below 12% by volume.

The beverage may be non-alcoholic. Examples include cola drinks, orange drinks, lemon drinks, lemonade, combination fruit-based soft drinks, tonic water, root beer, ginger ale, ginger beer and "energy" drinks.

The beverage may contain a sweetening agent. The sweetening agent may be a natural or synthetic sweetening agent, for example sucrose, fructose, glucose, maltose, dextrose, corn syrup, a sugar alcohol (for example sorbitol, xylitol, mannitol, maltitol or isomalt), or an intense sweetener (for example saccharin, sucralose, neotame, acesulfame potassium or aspartame).

Preferably the beverage contains one or more intense sweeteners, for example aspartame.

The beverage may be a "diet" beverage comprising one or more intense sweeteners, for example aspartame.

The beverage may be a "regular" beverage comprising one or more of the bulk sweetening agents, for example sucrose or corn syrup.

The beverage may comprise caffeine.

The beverage may be an "energy" beverage comprising a high level of caffeine. The "energy" beverage may comprise at least 150 mg/l of caffeine, preferably at least 200 mg/l, for example at least 250 mg/l.

The "energy" beverage may comprise a high level of bulk sweetening agents. Suitable bulk sweetening agents include sucrose, invert sugar syrup, glucose, fructose, polydextrose, high fructose corn syrup, maltodextrin, stevia and sugar alcohol. The "energy" beverage may comprise an intense sweetener.

The "energy" beverage may comprise one or more additional ingredients selected from taurine, glucuronolactone guarana, yerba mate, açaí, ginseng, carnitine, creatine, and ginkgo biloba. The "energy" beverage may comprise at least 200 mg/l of taurine, preferably at least 300 mg/l, for example at least 350 mg/l.

The beverage may be a "high solids" beverage. The "high solids" beverage may comprise a relatively high level of solids derived from fruit ingredients. The "high solids" beverage may be cloudy and/or turbid and/or opaque.

In some embodiments the beverage does not contain sugar.

Preferably the beverage is not a dairy product, for example a milk-based or yoghurt-based beverage. Preferably it does not contain a dairy component, for example milk, cream, yoghurt or ice-cream.

Preferably the beverage is substantially fat-free.

The beverage may be clear; that is to say it is preferably not cloudy and/or turbid and/or opaque. Preferably the clear beverage does not contain a hydrophobic clouding agent, for example a sterol ester or a stanol ester.

In principle the beverage may contain vitamins, for example one or more of A, B, C, D, E and K group vitamins. Vitamins may be added in addition to vitamins present in other components, such as fruit juice. Water-soluble vitamins B and C are very suitable components of the beverage. Fat soluble vitamins A, D, E and K are less so.

Preferably vitamin E or derivatives thereof are not present in the beverage. Preferably vitamins A and K, or derivatives thereof, are not present in the beverage.

Preferably the control agent, i.e. the foam control agent and/or carbon dioxide control agent as defined herein is the only agent present in the beverage to achieve foam control and/or control over carbon dioxide release. That is to say, there is preferably no control agent other than a polyglycerol fatty acid ester mixture present in the beverage. Preferably no compound intended to promote or boost the activity of the control agent is present.

The polyglycerol fatty acid ester mixture is the esterification reaction product of:
a) a triglyceride, and
b) a polyhydric alcohol which comprises:
   b1) a polyglycerol having at least 3 glycerol units, comprising triglycerol, 25-50 %wt, tetraglycerol, 25-50 %wt, higher polyglycerols, 15-40 %wt and other compounds, not more than 20 %wt; wherein the compound tetraglycerol is present in the polyglycerol component b1) in a higher amount by weight than the compound pentaglycerol, and
   b2) glycerol liberated from the triglyceride in the esterification reaction;
   wherein the molar ratio of component b1) to component a) in the esterification reaction mixture, based on average molecular weights, is 1 - 4 to 1;
   wherein the esterification reaction is carried out under alkaline conditions at a temperature of at least 150 °C; and
   wherein the control agent is present in the beverage in an amount of up to 20 mg/l.

The triglyceride may be an oil or fat. Preferably it is an oil (being a liquid at ambient temperature of 18 °C). It may be a hydrogenated derivative. Preferably, however, the triglyceride is a naturally-occurring oil, or fat, whose structure has not been chemically modified prior to the esterification reaction.

The triglyceride may be of animal or, preferably, of plant origin.

Batches of triglycerides may vary in their average molecular weight and in their distribution of components but the values stated in this specification define typical situations.

The triglyceride may be from a single triglyceride source, for example a single named oil or fat, or from a plurality of triglyceride sources, blended.

The fatty acid moieties of the triglyceride each have an R-CO- moiety, where R represents a hydrocarbyl moiety. Preferably there are at least 6 carbon atoms in the R-CO- moiety, preferably at least 8 carbon atoms; preferably at least 10 carbon atoms; most preferably at least 12 carbon atoms. Preferably there are up to 36 carbon atoms in the R-CO- moiety, preferably up to 28 carbon atoms, preferably up to 24 carbon atoms, more preferably up to 20 carbon atoms.

Suitably fats or oils for use in the esterification reaction may be selected from one or more of the following: almond oil, babassu oil, borage oil, canola oil, cocoa butter, coconut oil, corn oil (maize oil), cottonseed oil, flaxseed oil, grape seed oil, hazelnut oil, illipe, oat oil, olive oil, palm oil, palm olein, palm kernel oil, peanut oil, rapeseed oil, safflower oil, sesame oil, shea nut, soybean oil, tucum oil, sunflower oil, walnut oil, apricot oil, sweet almond oil, avocado oil, baobab oil, blueberry seed oil, calendula oil, camellia oil, cherry kernel oil, cranberry seed oil, hemp oil, jojoba oil, kukur nut oil, macadamia nut oil, manketti oil, melon seed oil, moringe oil, peach kernel oil, pistachio oil, raspberry seed oil, rice bran oil, rosehip oil, soya oil, wheatgerm oil, yangu oil; and their hydrogenated derivatives. A blend of oils or fats may be employed.

Fatty acids which may be regarded as 'delivered' to the esterification reaction by a fat or oil may be selected from one or more of the following: caproic acid, caprylic acid, capric acid, lauric acid, myristic acid, palmitic acid, palmitoleic acid, stearic acid, oleic acid, ricinoleic acid, vaccenic acid, linoleic acid, alpha-linolenic acid (ALA), gamma-linolenic acid (GLA), arachidic acid, gadoleic acid, arachidonic acid (AA), EPA (5,8,11,14,17-eicosapentaenoic acid), behenic acid, erucic acid, DHA (4,7,10,13,16,19-docosahexaenoic acid), and lignoceric acid.

Especially preferred acids include oleic acid, caproic acid, caprylic acid, capric acid, lauric acid, myristic acid, palmitic acid, stearic acid, linoleic acid, alpha-linolenic acid (ALA) - and gamma-linoleic acid (GLA). Especially preferred methyl esters may be methyl esters of such fatty acids. Oils or fats which yield such fatty acids are preferred oils or fats. Especially preferred oils are flax seed (flax) oil (which can yield alpha-linolenic acid, ALA), borage seed (borage) oil (which can yield gamma-linolenic acid, GLA) and palm kernel oil (which can yield palmitic acid).

Preferably the polyglycerol fatty acid ester is derived from palm kernel oil.

The fatty acid moieties which are components of a triglyceride may be saturated or unsaturated. If unsaturated they may suitably have from 1 to 6 double bonds, preferably 1 to 3 double bonds. The parent oils or fats may have been hydrogenated.

In one embodiment the fatty acid moieties are saturated fatty acid moieties having an average molecular weight of less than 282 g/mol, preferably less then 260 g/mol, preferably less than 240 g/mol.

In one embodiment the fatty acid moieties are unsaturated fatty acid moieties having an average molecular weight of less than 320 g/mol, preferably less than 300 g/mol.

Batches of polyglycerols may vary in their average molecular weight and in their distribution of components but the values stated in this specification define typical situations or typical average values.

Preferably the polyglycerol component b1) comprises at least 30 %wt, preferably at least 35 %wt, most preferably at least 40 %wt.
comprising triglycerol, 25-50 %wt, tetraglycerol, 25-50 %wt, higher polyglycerols, 15-40 %wt and other compounds, not more than 20 %wt; wherein the compound tetraglycerol is present in the polyglycerol component b1) in a higher amount by weight than the compound pentaglycerol
Preferably the compound tetraglycerol is present in the polyglycerol component b1) in substantially the same amount or in a higher amount by weight than the compound triglycerol.

Preferably the compound tetraglycerol is the single compound present in the largest proportion by weight in the polyglycerol component b1).

In commercial sources of polyglycerol-4, which may be used in the present invention as a preferred component b1), the proportions by weight of compounds is typically as follows:
triglycerol, 25-50 %wt
tetraglycerol, 25-50 %wt
higher polyglycerols, 15-40 %wt
other compounds, not more than 20 %wt, typically less than 12 %wt.

Higher polyglycerols herein means polyglycerol compounds formed of 5 or more glycerol units.

The other compounds may include water and diglycerol. Small amounts of glycerol may sometimes be present.

Preferably the average molecular weight of the polyglycerols in component b1), having at least 3 glycerol units, is in the range 220-500 g/mol, preferably 230-450 g/mol, preferably 240-420 g/mol, preferably 250-400 g/mol, preferably, preferably 260-370 g/mol, 280-350 g/mol, most preferably 300-330 g/mol.

Preferably glycerol constitutes at least 60 %wt of the component b2), preferably at least 70 %wt, preferably at least 80 %wt.

Preferably the ratio by weight of the component b2) to component b1) is one part b2) to at least 4 parts b1), preferably one part b2) to at least 6 parts b1), and most preferably at least one part b2) to at least 8 parts b1).

Preferably the ratio by weight of the component b2) to component b1) is one part b2) to up to 24 parts b1), preferably one part b2) to up to 20 parts b1), and most preferably one part b2) to up to 16 parts b1).

Preferably the components b1) and b2) make up at least 50 %wt of the control agent, preferably at least 60 %wt, preferably at least 70 %wt, preferably at least 80 %wt, preferably at least 90 %wt.

The reaction may be regarded as an interesterification reaction. Preferably, when a triglyceride is used, no glycerol is added.

The molar ratio of the polyglycerol to the triglyceride in the reaction mixture, based on average molecular weights, is 1 - 4 to 1, preferably 1.5 - 3 to 1, most preferably 2 - 2.5 to 1. Average molecular weight may be determined by normal measures. In the case of the triglyceride this may be from GC results. In the case of polyglycerol the raw material specifications may be used.

"Esterification" herein includes transesterification or interesterification.

Standard esterification conditions may be used. The reaction is carried out under alkaline conditions (e.g. by addition of sodium hydroxide or potassium hydroxide) and at elevated temperature of at least 150 °C, preferably 200-250 °C.

Preferably the foam control agent and/or carbon dioxide control agent is a liquid at ambient temperature of 18 °C.

Preferably the process is a one-pot process.

Preferably the control agent is the product of the esterification reaction, without work up (other than neutralisation of any catalyst present).

Preferably the reaction composition, which indicates the control agent without work up, is a liquid at ambient temperature of 18 °C.

A liquid herein may include a thin free-flowing liquid or a viscous liquid or a pasty material; or any substantially incompressible material which can be made to flow under moderate force; for example under gravity or on being squeezed from a bottle or tube.

Preferably the control agent is soluble in a triglyceride to a concentration of at least 0.5 %wt, preferably at least 1 %wt, preferably at least 2 %wt, preferably at least 4 %wt, preferably at least 6 %wt. and most preferably at least 8 %wt.

Preferably the control agent is soluble in water to a concentration of at least 0.5 %wt, preferably at least 1 %wt, preferably at least 2 %wt, preferably at least 4 %wt, preferably at least 6 %wt, and most preferably at least 8 %wt.

Preferably the control agent is soluble both in a triglyceride in an amount as stated above, and in water in an amount as stated above.

The solubility levels stated above refer to solubility at atmospheric pressure and at ambient temperature of 18 °C.

The control agent comprises a plurality of esters, formed from the range of triglycerides present in oil or fat and the range of polyglycerol compounds present in an as-supplied "polyglycerol" source. The control agent may comprise many esters, for example over 20 ester compounds, or over 50 ester compounds, or over 100 ester compounds.

Preferably the polyglycerol fatty acid ester control agent is the esterification reaction product of a) palm kernel oil, and b) a polyhydric alcohol which comprises b1) a polyglycerol having at least 3 glycerol units, and b2) glycerol.

Preferably the polyglycerol fatty acid ester control agent is the esterification reaction product of a) palm kernel oil, and b) a polyhydric alcohol which comprises b1) polyglycerol-4, and b2) glycerol liberated from the triglyceride in the esterification reaction.

Preferably the polyglycerol fatty acid ester control agent is the esterification reaction product of a) palm kernel oil, and b) polyglycerol-4.

Preferably the control agent has an HLB value in the range 7-16, preferably 7-14, more preferably 7-13.

Compounds of the type produced by the reaction described above are widely accepted by regulatory authorities as being non-toxic. They include compounds which are permitted for use in food and beverage products by both the relevant authorities in the US and in the EU.

The control agent is preferably present in an amount of at least 0.01 mg/l, preferably at least 0.04 mg/l, preferably at least 0.08 mg/l, preferably at least 0.12, preferably at least 0.2 mg/l. In certain embodiments it is present in an amount of at least 0.5 mg/l, especially at least 1 mg/l.

The control agent is present in an amount of up to 20 mg/l.

In embodiments where the carbonated beverage is non-alcoholic, the control agent is preferably present in an amount of from 1 mg/l to 10 mg/l, preferably from 2 mg/l to 8 mg/l, preferably from 3 mg/l to 7 mg/l.

In embodiments where the carbonated beverage is alcoholic, the control agent is preferably present in an amount of from 1 mg/l to 20 mg/l, preferably from 4 mg/l to 16 mg/l, preferably from 7 mg/l to 13 mg/l.

It will be appreciated that many of the parameters expressed above for a control agent of the invention are mean values, given that the control agents are distributions of compounds; for example molecular weight, HLB and number of carbon atoms per molecule or residue. A similar comment applies to degree of polymerisation of glycerol, given that polymerisation produces a distribution.

Preferably the control agent is added to the beverage, or to a precursor therefor (including a concentrate) as a liquid, though it may in some embodiments be a powder. The control agent may itself be a liquid at ambient temperature, or it may be liquefiable, for example by heating it in order to melt it, or by dissolving or dispersing it in a liquid carrier. The control agent may be part of a concentrate - for example liquid, syrup, powder or dissolvable tablet or block - to which a carbonated liquid, for example carbonated water, is added.

Preferably the control agent reduces loss of carbon dioxide from the beverage on pouring, the loss being within the foam which forms, and on breaking of the foam. That is, it is preferably the case that the loss of carbon dioxide from the beverage on and after pouring is reduced. Preferably the control agent reduces the loss of carbon dioxide from the beverage on standing in an opened bottle. Preferably the control agent reduces the loss of carbon dioxide from the beverage on standing in a vessel after pouring. In each case "reduced" means reduced compared with the situation in the absence of the control agent.

The control agent is believed to interact, for example coat, the surface of bubbles of gas in the beverage.

The transition between a quick-breaking foam and a persistent foam is believed to be a function of the extent to which the control agent coats bubbles of the carbon dioxide. A thin coating of the control agent on the bubbles is believed to inhibit coalescence of bubbles and/or gas transfer through the skin of the bubbles (which is sometimes called "disproportionation" or "Ostwald ripening" primarily in the case of CO₂); but to allow bubbles which reach the surface and form foam to break easily, so that the foam collapses. Accordingly the foam which forms does not become excessive and/or dies away rapidly. A thin layer of coating may give essentially no foam, or a low foam, or a foam which dies back rapidly, so that dispensing can be faster than heretofore. This is a desirable result for many beverages including many soft drinks. A larger amount of control agent in the beverage may manifest itself as a concentration of free control agent in the liquid phase of the beverage and/or as a thicker coating on the bubbles and to produce stronger bubbles which break less easily once they reach the surface and form foam. This is a desirable result for some beverages including some beers. It is important to note that the loss of carbon dioxide from the beverage on and after pouring is preferably less that it would have been in the absence of the control agent, whether a quick-breaking foam or a persistent foam is produced.

Preferably the control agent reduces the loss of carbon dioxide from the beverage in a closed container which has been opened by a consumer and part of the beverage has been removed.

Preferably the amount of carbon dioxide present in the beverage 24 hours after opening the container, held at 23 °C throughout, is at least 20 % greater, preferably at least 50 % greater, than the amount of carbon dioxide present in a control sample of the same beverage, tested in the same way but having no control agent.

Preferably the amount of carbon dioxide present in the beverage 24 hours after opening the container, held at 23 °C throughout, is at least 50 % of the amount of carbon dioxide present when the container was opened.

Preferably the control agent reduces the loss of carbon dioxide from the beverage in a closed substantially full container which has not been opened by a consumer. Preferably the control agent improves the shelf-life of the beverage.

Preferably the amount of carbon dioxide present in the beverage in a closed substantially full container, after filling a container with the beverage and storing at 23 °C for 60 days, is at least 5 % greater, preferably at least 10 % greater, preferably at least 15 % greater than the amount of carbon dioxide present in a control sample of the same beverage, tested in the same way but having no control agent.

For the purpose of these definitions "the amount" of carbon dioxide present means the total amount of carbon dioxide which can be extracted from the beverage, including carbon dioxide which is dissolved under normal conditions.

In accordance with a second aspect of the present invention there is provided a sealed container containing a carbonated beverage of the first aspect. The sealed container is suitably of a pressure-resisting construction, such as a metal can or a deformation-resistant plastics bottle.

In accordance with a third aspect of the present invention there is provided a method of making a beverage of the first aspect, comprising:
1) reacting:
   a) a triglyceride, and b) a polyhydric alcohol which comprises:
   b1) a polyglycerol having at least 3 glycerol units, comprising triglycerol, 25-50 %wt, tetraglycerol, 25-50 %wt, higher polyglycerols, 15-40 %wt and other compounds, not more than 20 %wt; wherein the compound tetraglycerol is present in the polyglycerol component b1) in a higher amount by weight than the compound pentaglycerol and
   b2) glycerol liberated from the triglyceride in the esterification reaction;
   to provide an esterification reaction product; and
2) adding the esterification reaction product to a base beverage (that is, a beverage lacking only the control agent) or a precursor thereof in an amount of up to 20 mg/l.

The precursor could be a non-carbonated diluted form, or a concentrate, or an ingredient, or an ingredient mix. The method may include the step of sealing the beverage in pressure-resistant containers. It is found that in accordance with the present invention the filling process is much quicker than without the control agent. The amount of foam formed is reduced, and it collapses more quickly. Both phenomena lead to increased filling rates.

In accordance with a fourth aspect of the present invention there is provided the use, for the purpose of reducing foaming and improving retention of carbon dioxide in a carbonated beverage, of a compound as defined above.

In accordance with a fifth aspect of the present invention there is provided the use of a compound as defined above in a carbonated beverage to produce a) enhanced retention of the carbon dioxide in the beverage and b) a quick-breaking foam.

The paragraphs which follow relate to any aspect of the present invention, expressed above or below, unless we expressly indicate otherwise or unless the context demands otherwise.

Addition of a control agent as defined herein may have a remarkable effect in relation to foam control, when a carbonated beverage is formed, or is delivered to a vessel, whether the vessel be a can or bottle in a filling plant, or a drinking vessel such as a glass or cup. Foaming may be significantly reduced. It appears to be the case with many beverages that excessive foaming is inhibited, and any foam head which is produced is often more coarse, and collapses more quickly. Consequently there arise the advantages, that less carbon dioxide is lost into the atmosphere during filling (giving economic and environmental benefits); and less carbon dioxide escapes from the beverage when it is poured into a drinking vessel (thereby giving better drinking quality).

A further advantage of using a control agent as defined herein is that the carbon dioxide appears to be retained for longer in the beverage in a container which has been opened. The familiar problem of bottled beverages going "flat" (or "losing their fizz") is thereby ameliorated.

A further advantage of using a control agent as defined herein is that the carbon dioxide appears to be retained for longer in the beverage in a closed container which has been opened by a consumer and part of the beverage has been removed. The familiar problem of bottled beverages going "flat" (or "losing their fizz") is thereby ameliorated.

A further advantage of using a control agent as defined herein is that the carbon dioxide appears to be retained for longer in the beverage in a closed substantially full container which has not been opened by a consumer. The shelf-life of the beverage in the container is thereby improved.

A further advantage of using a control agent as defined herein is that the carbon dioxide appears to be retained for longer in the beverage which has been poured into a vessel. The familiar problem of poured beverages going "flat" (or "losing their fizz") is thereby ameliorated. Without being bound by theory it is believed that a control agent as used herein makes it more favoured for the carbon dioxide to stay in the beverage solution (or, put another way, less favoured for it to burst out of the beverage solution, as carbon dioxide bubbles). Thus we believe that less carbon dioxide is available to make foam. We believe this means that less foam forms; and that more carbon dioxide is retained within the beverage, which stays fizzier. In accordance with our view, a foam control agent and/or carbon dioxide control agent may be regarded as a carbon dioxide stabiliser, by which we mean an agent which stabilises carbon dioxide in the beverage or promotes the retention of carbon dioxide in the beverage, and such terms may be used in place of "foam control agent and/or carbon dioxide control agent", in this specification.

The invention will be further described, by way of illustration only, with reference to the following examples.

### Control Agent Preparation

### Example 1 - Palm kernel oil + polyglycerol-4 (PKPG4)

| | |
|---|---|
| Palm kernel oil (average Mw = 722) | = 722 g |
| Polyglycerol-4 (average Mw = 250) | = 550 g |
| NaOH | = 0.2 g |

Procedure: Charge oil to reaction vessel, charge in polyglycerol-4, warm to melt reagents, when temperature reaches 50 °C charge in NaOH. Evacuate headspace with vacuum pump, break vacuum with nitrogen, repeat purge and refresh N₂ blanket on reaction. Heat to between 220 and 240 °C. When at this temperature apply vacuum and monitor reaction visually - reaction mixture becomes transparent after 1 hour at 220 °C.

Check TLC of reaction (toluene 80 %, chloroform 15 %. methanol 5 %). Visualise with potassium permanganate stain showing complete reaction of triglyceride. Cool to room temperature. At 90 °C add phosphoric acid (0.2 g) to neutralise catalyst. Carry out cooling under N₂ atmosphere.

Product: recovery = 1200 g
pale amber oil: viscous at ambient temperature

### Example 2 - Flax oil + polyglycerol-4

| | |
|---|---|
| Flax oil (average Mw = 872) | = 872 g |
| Polyglycerol-4 (average Mw = 250) | = 550 g |
| NaOH | = 0.2 g |

Procedure: Reaction as described for Example 1. Reaction became transparent after 45 minutes. TLC confirmed reaction of all triglyceride.

Product: recovery = 1375 g
pale amber viscous oil

### Example 3 - Borage oil + polyglycerol-4

| | |
|---|---|
| Borage oil (average Mw = 879) | = 879 g |
| Polyglycerol-4 (average Mw = 250) | = 550 g |
| NaOH | = 0.2 g |

Reaction carried out as per Example 1. Reaction went transparent after 50 minutes at 200 °C. TLC indicated all triglyceride consumed.

Product: recovery = 1385 g
pale green viscous oil

### Control Agent Testing

In order to assess the anti-foaming and carbon dioxide retention characteristics the polyglycerol ester product obtained from the procedure of Example 1 was tested against Polysorbate 65 or sorbitan monolaurate in the following procedures using one of the following beverages:
A) Diet Coca Cola (an artificially sweetened cola containing aspartame and acesulfame potassium intense sweeteners but no sugar)
B) Regular Coca Cola (an artificially sweetened cola containing aspartame and acesulfame potassium intense sweeteners, but no sugar)
C) Generic Energy drink (a beverage containing a high level of sugar, 300 mg/l caffeine and 400 mg/l taurine).
D) Vimto (a high solids, acidulated, fruit-flavoured carbonated beverage)
E) Budweiser (an artificially carbonated beer)

An aqueous dispersion of the polyglycerol ester product of Example 1 (PKPG4) was prepared by adding it to hot water at approximately 50 °C, mixing and allowing the mixture to cool to 20 °C, to produce a 0.5% w/w aqueous dispersion.

An aqueous dispersion of Polysorbate 65 was prepared as described above for the polyglycerol ester product of Example 1.

The test beverages used in Examples 5 to 10 were prepared according to the following general procedure: Appropriate quantities of the dispersion of the polyglycerol ester product of Example 1 or Polysorbate 65 were introduced by pipette into full bottles of the beverages, the caps having been removed, then replaced tightly. The bottles were inverted 10 times using a smooth action, to obtain a uniform dispersion before allowing it to equilibrate for one hour at ambient temperature (20 °C). Controls were treated in a similar way, but with 1.0 g of water being added to the beverages instead of the test solutions containing the polyglycerol ester product of Example 1 or Polysorbate 65.

### Example 5 - Foam height and foam collapse of beverage A

2 litre bottles of beverage A were either untreated or treated with either Polysorbate 65 (P65) or the polyglycerol ester product of Example 1 (PKPG4) according to the amounts listed in Table 1. The contents of the bottles were then poured into a 10 litre measuring cylinder by holding the bottle approximately horizontally over the opening of the measuring cylinder. Pouring was continued until all the contents had been poured into the measuring cyclinder or the foam volume of the poured beverage exceeded the capacity of the measuring cylinder. The foam volume was then measured by subtracting the visible volume of the unfoamed beverage from the total volume of the foamed and unfoamed beverage in the measuring cylinder. The time the foam took to collapse was recorded.

**Table 1 - Foam volume and time to foam collapse of beverage A**

| Treat rate of additive | | Foam volume (l) | Time to foam collapse (s) |
|---|---|---|---|
| P65 (comparative) | Example 1 | | |
| - | - | Overfilled vessel | 74 |
| 2.5 | | 4.5 | 32 |
| | 2.5 | 2.5 | 10 |
| 5.0 | | 2.8 | 10 |
| | 5.0 | 2.2 | 5 |
| 7.5 | | 2.9 | 10 |
| | 7.5 | 2.2 | 5 |
| 10 | | 2.6 | 5 |
| | 10 | 2.5 | 8 |

### Example 6 - Foam height and foam collapse of beverage B

The procedure of Example 5 was repeated using 2 litre bottles of beverage B.

**Table 2 - Foam volume and time to foam collapse of beverage B**

| Treat rate of additive | | Foam volume (l) | Time to foam collapse (s) |
|---|---|---|---|
| P65 (comparative) | Example 1 | | |
| - | - | 3.6 | 32 |
| 2.5 | | 2.5 | 7 |
| | 2.5 | 2.3 | 5 |
| 5.0 | | 2.3 | 5 |
| | 5.0 | 2.3 | 4 |
| 7.5 | | - | - |
| | 7.5 | 2.75 | 10 |
| 10 | | - | - |
| | 10 | 2.5 | 7 |

### Example 7 - Foam height and foam collapse of beverage C

The procedure of Example 5 was repeated using 1 litre bottles of beverage C.

**Table 3 - Foam volume and time to foam collapse of beverage C**

| Treat rate of additive | | Foam volume (l) | Time to foam collapse (s) |
|---|---|---|---|
| P65 (comparative) | Example 1 | | |
| - | - | 1.25 | 22 |
| 2.5 | | - | - |
| | 2.5 | 0 | 0 |
| 5.0 | | 1.2 | 10 |
| | 5.0 | 0 | 0 |
| 7.5 | | - | - |
| | 7.5 | 0 | 0 |
| 10 | | - | - |
| | 10 | 0 | 0 |

### Example 8 - Foam height and foam collapse of beverage D

The procedure of Example 5 was repeated using 2 litre bottles of beverage D.

**Table 4 - Foam volume and time to foam collapse of beverage D**

| Treat rate of additive | | Foam volume (l) | Time to foam collapse (s) |
|---|---|---|---|
| P65 (comparative) | Example 1 | | |
| - | - | 4.0 | > 120 |
| 2.5 | | 4.1 | 120 |
| | 2.5 | 3.5 | 90 |
| 5.0 | | 3.9 | 120 |
| | 5.0 | 2.75 | 90 |
| 7.5 | | 3.9 | 60 |
| | 7.5 | 2.5 | 90 |
| 10 | | - | - |
| | 10 | 2.5 | 90 |

### Example 9 - Foam height and foam collapse of beverage E

The procedure of Example 5 was repeated using 0.3 litre bottles of beverage E and sorbitan monolaurate (SML) instead of Polysorbate 65.

**Table 5 - Foam volume and time to foam collapse of beverage E**

| Treat rate of additive | | Foam volume (l) | Time to foam collapse (s) |
|---|---|---|---|
| Sorbitan monolaurate (comparative) | Example 1 | | |
| - | - | 0.5 | 120 |
| 5 | | 0.5 | 60 |
| | 5 | 0.4 | 75 |
| 10 | | 0.4 | 40 |
| | 10 | 0.4 | 30 |
| 15 | | 0.4 | 40 |
| | 15 | 0.4 | 45 |
| 30 | | 0.5 | 45 |
| | 30 | 0.4 | 30 |
| 45 | | 0.4 | 45 |
| | 45 | 0.4 | 35 |

### Example 10 - Carbon dioxide retention titration experiments

The non-alcoholic carbonated beverages A, B and C were dosed in pairs with 5ppm Polysorbate 65 or the polyglycerol ester product of Example 1. Pairs of bottles of beverage E were dosed with 10 ppm sorbitan monolaurate or the polyglycerol ester product of Example 1. One bottle of each beverage was opened and then titrated against 5 ml of 0.1 M NaOH solution every 10 minutes after opening (the bottles remained open to the air for the duration of the experiment). 150 ml was poured from the second bottle and the poured beverage titrated against a similar quantity of sodium hydroxide solution. Titration results were measured at 10 minute intervals for untreated control samples and once for a fully flat quantity of each beverage.

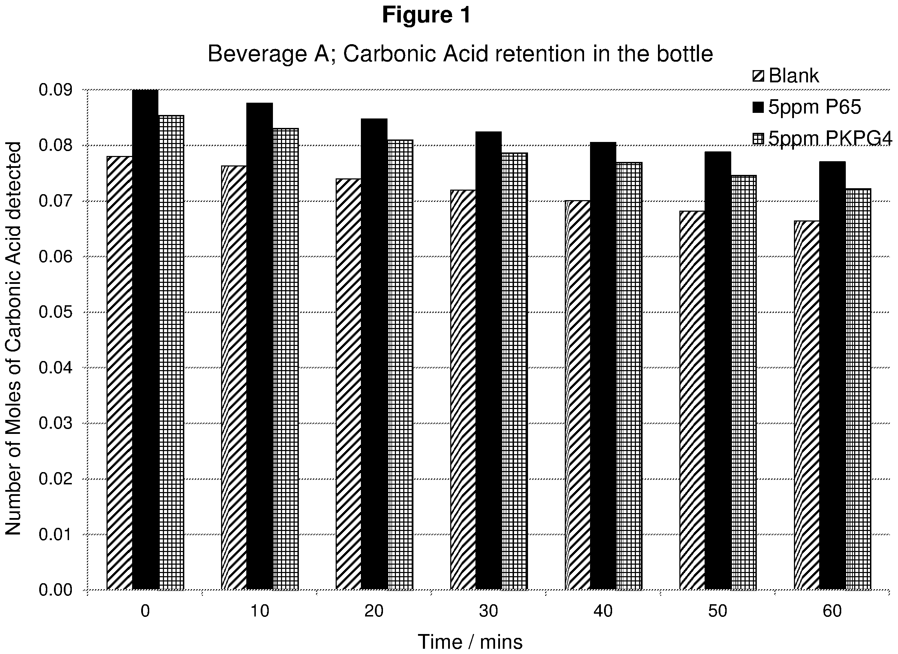

The titration data has been converted from the units of grams of beverage required to neutralise 5 ml of 0.1 M sodium hydroxide into number of moles of carbonic acid detected in the beverage. The results are plotted in the bar charts of Figures 1 to 8

The results shown in Figure 1 demonstrate that 5 ppm of the additive of Example 1 (PKPG4) retains a larger amount of carbon dioxide in the beverage after opening a bottle of beverage A, compared with an untreated control (blank).

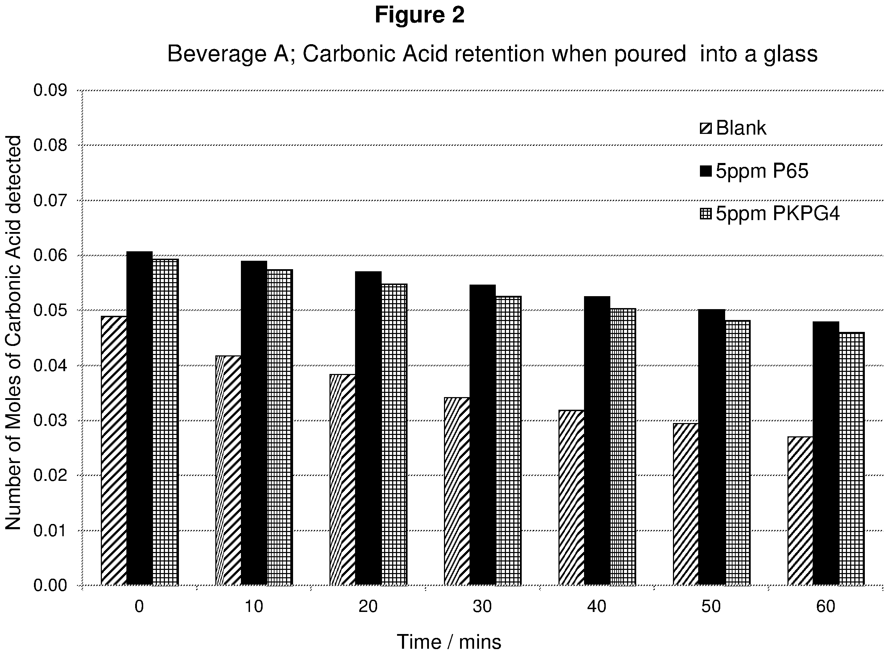

The results shown in Figure 2 demonstrate that 5 ppm of the additive of Example 1 retains a larger amount of carbon dioxide in the beverage after opening a bottle and pouring beverage A into a vessel, compared with an untreated control.

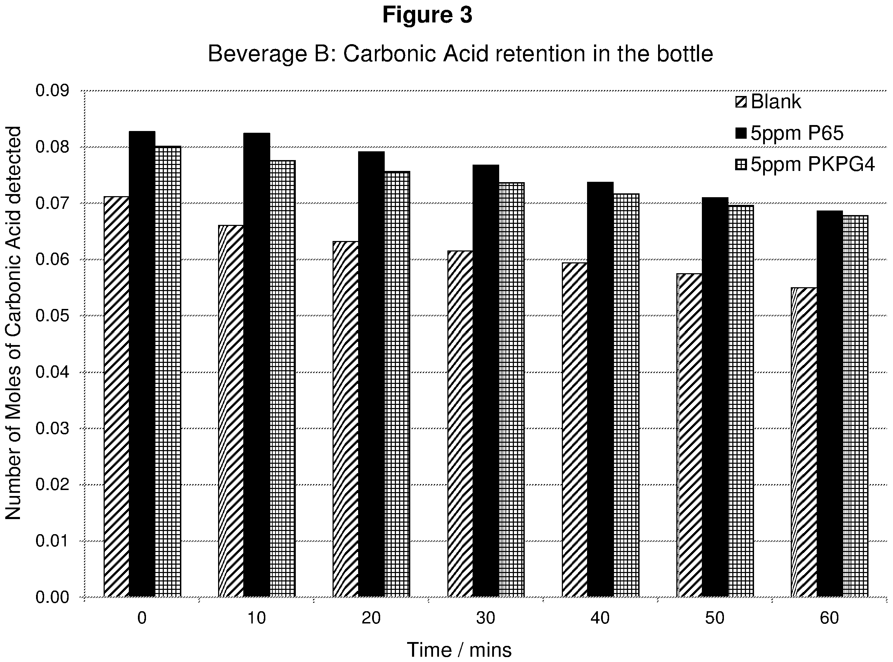

The results shown in Figure 3 demonstrate that 5 ppm of the additive of Example 1 retains a larger amount of carbon dioxide in the beverage after opening a bottle of beverage B, compared with an untreated control.

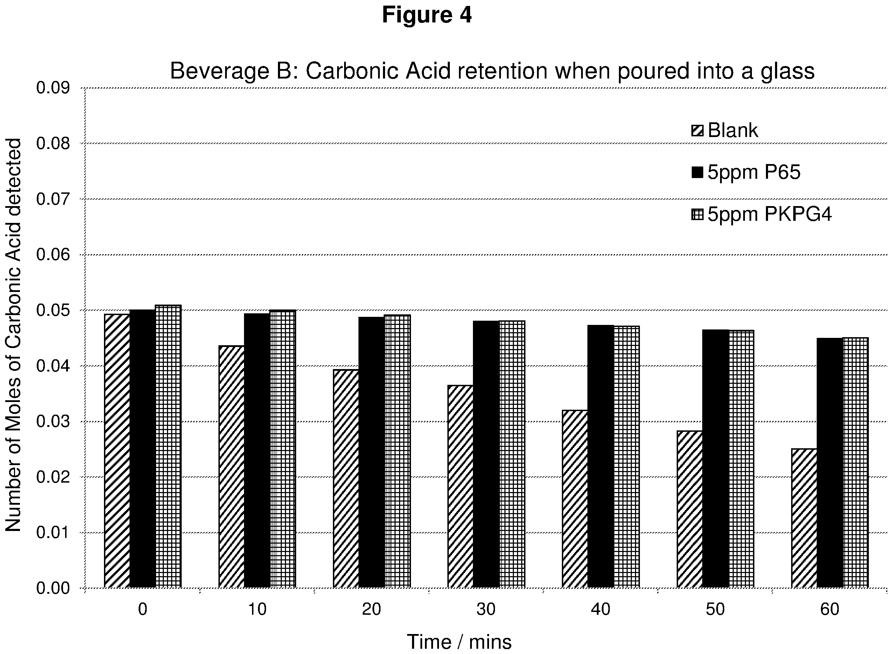

The results shown in Figure 4 demonstrate that 5 ppm of the additive of Example 1 retains a larger amount of carbon dioxide in the beverage after opening a bottle and pouring beverage B into a vessel, compared with an untreated control.

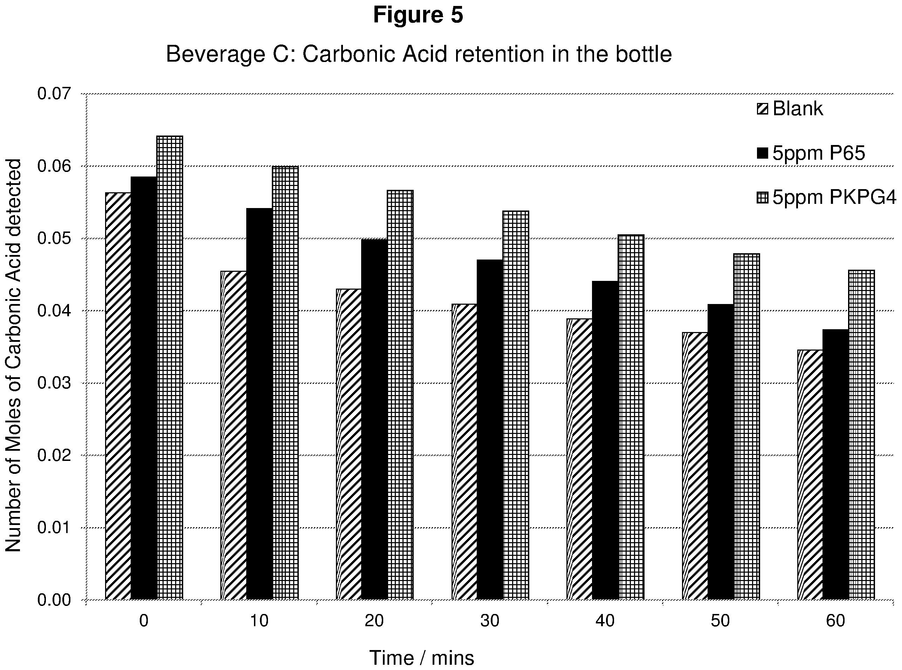

The results shown in Figure 5 demonstrate that 5 ppm of the additive of Example 1 retains a larger amount of carbon dioxide in the beverage after opening a bottle of beverage C, compared with an untreated control and 5 ppm of P65.

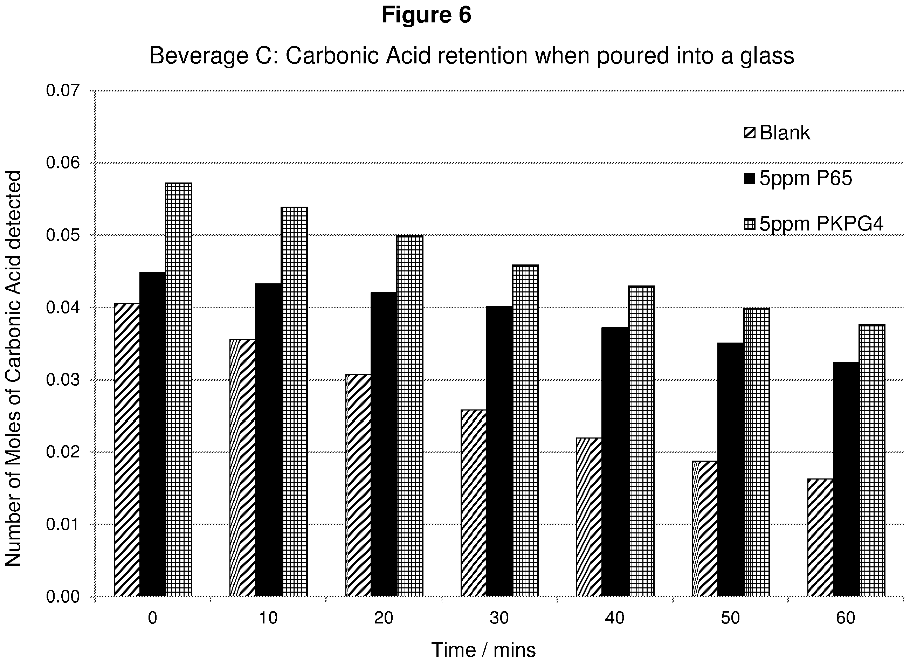

The results shown in Figure 6 demonstrate that 5 ppm of the additive of Example 1 retains a larger amount of carbon dioxide in the beverage after opening a bottle and pouring beverage C into a vessel, compared with an untreated control and 5 ppm of P65.

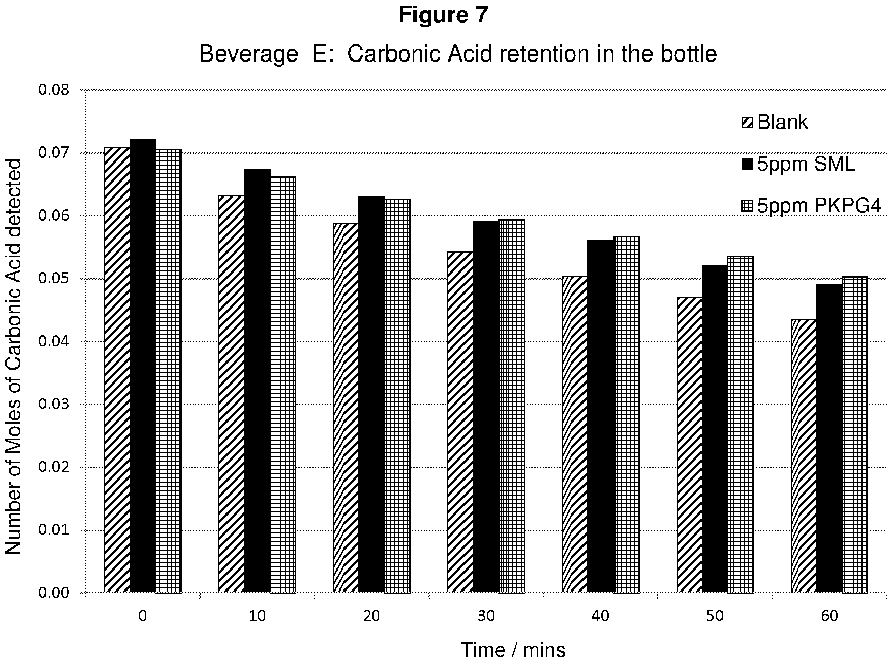

The results shown in Figure 7 demonstrate that 5 ppm of the additive of Example 1 retains a larger amount of carbon dioxide in the beverage after opening a bottle of beverage E, compared with an untreated control.

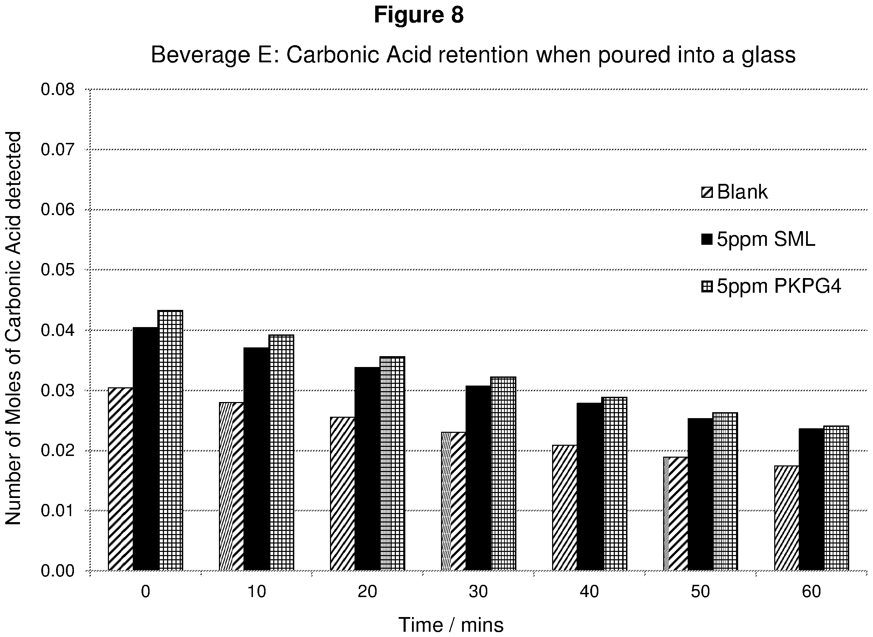

The results shown in Figure 8 demonstrate that 5 ppm of the additive of Example 1 retains a larger amount of carbon dioxide in the beverage after opening a bottle and pouring beverage E into a vessel, compared with an untreated control.

Furthermore, foams generated during the pouring of treated beverages are less dense (or coarser) than those of their untreated counterparts, especially in the case of artificially sweetened drinks. Also, they collapsed more quickly. This may be one factor in the increased weight of beverage that can be poured; the other likely factor being the reduced foam head that forms. Both factors - the reduced foam heads and the faster collapse of the foam heads which did form - were empirically observed. Another empirical observation was that the beverages containing a foam control agent were of better taste than the control. Comments included that the former were "tangy" and "noticeably fizzier" and that the latter was "flatter" and "dull tasting". It is believed that the difference observed was because the latter had lost more carbon dioxide.

The combination of the reduced foaming and the rapid foam collapse effects affords obvious advantages with respect to fill speeds upon bottling and canning, and further advantages on dispensing. The taste advantage gives a further important benefit, directly to the consumer.

## Claims

1. An artificially carbonated beverage containing a foam control agent and/or carbon dioxide control agent, wherein the control agent is a polyglycerol fatty acid ester mixture which is the esterification reaction product of
a) a triglyceride, and
b) a polyhydric alcohol which comprises:
b1) a polyglycerol having at least 3 glycerol units, comprising triglycerol, 25-50 %wt, tetraglycerol, 25-50 %wt, higher polyglycerols, 15-40 %wt and other compounds, not more than 20 %wt; wherein the compound tetraglycerol is present in the polyglycerol component b1) in a higher amount by weight than the compound pentaglycerol; and
b2) glycerol liberated from the triglyceride in the esterification reaction;
wherein the molar ratio of component b1) to component a) in the esterification reaction mixture, based on average molecular weights, is 1 - 4 to 1;
wherein the esterification reaction is carried out under alkaline conditions at a temperature of at least 150 °C; and
wherein the control agent is present in the beverage in an amount of up to 20 mg/l.

2. The artificially carbonated beverage as claimed in claim 1, wherein the control agent has an HLB value in the range 7-16.

3. The artificially carbonated beverage as claimed in any preceding claim, wherein the average molecular weight of the polyglycerols in component b1), having at least 3 glycerol units, is in the range 230-450 g/mol.

4. The artificially carbonated beverage as claimed in claim 1, wherein component a) is palm kernel oil.

5. The artificially carbonated beverage as claimed in any preceding claim, wherein the beverage is non-alcoholic.

6. The artificially carbonated beverage as claimed in any of claims 1 to 4, wherein the beverage is alcoholic.

7. The artificially carbonated beverage as claimed in any of claims 1 to 5, wherein the beverage comprises caffeine and optionally comprises taurine.

8. The artificially carbonated beverage as claimed in any preceding claim, wherein the compound tetraglycerol is the single compound present in the largest proportion by weight in the polyglycerol component b1).

9. A sealed container containing an artificially carbonated beverage as claimed in any preceding claim.

10. A method of making a beverage as claimed in any of claims 1 to 8, the method comprising the steps of:
1) reacting:
a) a triglyceride, and b) a polyhydric alcohol which comprises:
b1) a polyglycerol having at least 3 glycerol units, comprising triglycerol, 25-50 %wt, tetraglycerol, 25-50 %wt, higher polyglycerols, 15-40 %wt and other compounds, not more than 20 %wt; wherein the compound tetraglycerol is present in the polyglycerol component b1) in a higher amount by weight than the compound pentaglycerol and
b2) glycerol liberated from the triglyceride in the esterification reaction;
to provide an esterification reaction product; and
2) adding the esterification reaction product to a base beverage in an amount of up to 20 mg/l.

11. Use, for the purpose of reducing foaming and improving retention of carbon dioxide in an artificially carbonated beverage, of a polyglycerol fatty acid ester mixture; wherein the polyglycerol fatty acid ester mixture is:
the esterification reaction product of a) a triglyceride and b) a polyhydric alcohol which comprises b1) a polyglycerol having at least 3 glycerol units, and b2) glycerol liberated from the triglyceride in the esterification reaction; and
wherein the polyglycerol fatty acid ester mixture is present in the beverage in an amount of up to 20 mg/l.

12. Use of a polyglycerol fatty acid ester mixture in a carbonated beverage to produce a) enhanced retention of the carbon dioxide in the beverage and b) a quick-breaking foam; wherein the polyglycerol fatty acid ester mixture is:
the esterification reaction product of a) a triglyceride and b) a polyhydric alcohol which comprises b1) a polyglycerol having at least 3 glycerol units, and b2) glycerol liberated from the triglyceride in the esterification reaction; and
wherein the polyglycerol fatty acid ester mixture is present in the beverage in an amount of up to 20 mg/l.

## Patentansprüche

1. Künstlich mit Kohlensäure versetztes Getränk, das ein Schaumregulierungsmittel und/oder Kohlendioxidregulierungsmittel enthält, wobei das Regulierungsmittel ein Polyglycerol-Fettsäureester-Gemisch ist, das das Veresterungsreaktionsprodukt von:
a) einem Triglycerid und
b) einem polyhydrischen Alkohol, der umfasst:
b1) ein Polyglycerol mit wenigstens 3 Glyceroleinheiten, umfassend Triglycerol, 25-50 Gew.-%, Tetraglycerol, 25-50 Gew.-%, höhere Polyglycerole, 15-40 Gew.-%, und andere Komponenten, nicht mehr als 20 Gew.-%; wobei die Verbindung Tetraglycerol in einer höheren Gewichtsmenge als die Verbindung Pentaglycerol in der Polyglycerolkomponente b1) vorhanden ist; und
b2) bei der Veresterungsreaktion aus dem Triglycerid freigesetztes Glycerol;
ist, wobei das Molverhältnis von Komponente b1) zu Komponente a) in dem Veresterungsreaktionsgemisch, bezogen auf mittlere Molekulargewichte, 1-4 zu 1 beträgt;
wobei die Veresterungsreaktion unter alkalischen Bedingungen bei einer Temperatur von wenigstens 150 °C durchgeführt wird; und
wobei das Regulierungsmittel in einer Menge von bis zu 20 mg/l in dem Getränk enthalten ist.

2. Künstlich mit Kohlensäure versetztes Getränk gemäß Anspruch 1, wobei das Regulierungsmittel einen HLB-Wert in dem Bereich von 7-16 aufweist.

3. Künstlich mit Kohlensäure versetztes Getränk gemäß einem der vorstehenden Ansprüche, wobei das mittlere Molekulargewicht der Polyglycerole in Komponente b1) mit wenigstens 3 Glyceroleinheiten in dem Bereich von 230-450 g/mol liegt.

4. Künstlich mit Kohlensäure versetztes Getränk gemäß Anspruch 1, wobei die Komponente a) Palmkernöl ist.

5. Künstlich mit Kohlensäure versetztes Getränk gemäß einem der vorstehenden Ansprüche, wobei das Getränk nichtalkoholisch ist.

6. Künstlich mit Kohlensäure versetztes Getränk gemäß einem der Ansprüche 1 bis 4, wobei das Getränk alkoholisch ist.

7. Künstlich mit Kohlensäure versetztes Getränk gemäß einem der Ansprüche 1 bis 5, wobei das Getränk Koffein umfasst und gegebenenfalls Taurin umfasst.

8. Künstlich mit Kohlensäure versetztes Getränk gemäß einem der vorstehenden Ansprüche, wobei die Verbindung Tetraglycerol jene Einzelverbindung ist, die in dem größten Gewichtsanteil in der Polyglycerolkomponente b1) vorhanden ist.

9. Verschlossener Behälter, der ein künstlich mit Kohlensäure versetztes Getränk gemäß einem der vorstehenden Ansprüche enthält.

10. Verfahren zur Herstellung eines Getränks gemäß einem der Ansprüche 1 bis 8, wobei das Verfahren die Schritte umfasst:
1) Umsetzen:
a) eines Triglycerids und b) eines polyhydrischen Alkohols, der umfasst:
b1) ein Polyglycerol mit wenigstens 3 Glyceroleinheiten, umfassend Triglycerol, 25-50 Gew.-%, Tetraglycerol, 25-50 Gew.-%, höhere Polyglycerole, 15-40 Gew.-%, und andere Komponenten, nicht mehr als 20 Gew.-%; wobei die Verbindung Tetraglycerol in einer höheren Gewichtsmenge als die Verbindung Pentaglycerol in der Polyglycerolkomponente b1) vorhanden ist; und
b2) bei der Veresterungsreaktion aus dem Triglycerid freigesetztes Glycerol;
um ein Veresterungsreaktionsprodukt zu ergeben; und
2) Zugeben des Veresterungsreaktionsprodukts zu einem Grundgetränk in einer Menge von bis zu 20 mg/l.

11. Verwendung eines Polyglycerol-Fettsäureester-Gemischs zum Zweck der Verringerung von Schaumbildung und der Verbesserung des Haltens von Kohlendioxid in einem künstlich mit Kohlensäure versetzten Getränk; wobei das Polyglycerol-Fettsäureester-Gemisch ist:
das Veresterungsreaktionsprodukt von a) einem Triglycerid und b) einem polyhydrischen Alkohol, der umfasst: b1) ein Polyglycerol mit wenigstens 3 Glyceroleinheiten und b2) bei der Veresterungsreaktion aus dem Triglycerid freigesetztes Glycerol; und
wobei das Polyglycerol-Fettsäureester-Gemisch in einer Menge von bis zu 20 mg/l in dem Getränk enthalten ist.

12. Verwendung eines Polyglycerol-Fettsäureester-Gemischs in einem mit Kohlensäure versetzten Getränk, um a) verbessertes Halten des Kohlendioxids in dem Getränk und b) einen schnellbrechenden Schaum zu erzeugen; wobei das Polyglycerol-Fettsäureester-Gemisch ist:
das Veresterungsreaktionsprodukt von a) einem Triglycerid und b) einem polyhydrischen Alkohol, der umfasst: b1) ein Polyglycerol mit wenigstens 3 Glyceroleinheiten und b2) bei der Veresterungsreaktion aus dem Triglycerid freigesetztes Glycerol; und
wobei das Polyglycerol-Fettsäureester-Gemisch in einer Menge von bis zu 20 mg/l in dem Getränk enthalten ist.

## Revendications

1. Boisson artificiellement gazéifiée contenant un agent de contrôle de la mousse et/ou un agent de contrôle du dioxyde de carbone, dans laquelle l'agent de contrôle est un mélange d'esters d'acides gras et de polyglycérol qui est le produit de réaction d'estérification
a) d'un triglycéride, et
b) d'un alcool polyhydrique qui comprend :
b1) un polyglycérol ayant au moins 3 motifs glycérol, comprenant 25-50% en poids de triglycérol, 25-50% en poids de tétraglycérol, 15-40% en poids de polyglycérols supérieurs, et pas plus de 20% en poids d'autres composés, où le composé de tétraglycérol est présent dans le composant de polyglycérol b1) selon une quantité supérieure en poids par rapport au composé de pentaglycérol ; et
b2) du glycérol libéré à partir du triglycéride dans la réaction d'estérification ;
où le rapport molaire du composant b1) au composant a) dans le mélange de réaction d'estérification, sur la base des poids moléculaires moyens, va de 1-4 à 1 ;
où la réaction d'estérification est effectuée dans des conditions alcalines à une température d'au moins 150°C ; et
où l'agent de contrôle est présent dans la boisson selon une quantité allant jusqu'à 20 mg/l.

2. Boisson artificiellement gazéifiée selon la revendication 1, dans laquelle l'agent de contrôle possède une valeur HLB dans la plage de 7-16.

3. Boisson artificiellement gazéifiée selon l'une quelconque des revendications précédentes, dans laquelle le poids moléculaire moyen des polyglycérols dans le composant b1), ayan au moins 3 motifs de glycérol, se trouve dans la plage de 230-450 g/mol.

4. Boisson artificiellement gazéifiée selon la revendication 1, dans laquelle le composant a) est constitué d'huile de palmiste.

5. Boisson artificiellement gazéifiée selon l'une quelconque des revendications précédentes, **caractérisée en ce que** la boisson est non alcoolisée.

6. Boisson artificiellement gazéifiée selon l'une quelconque des revendications 1 à 4, **caractérisée en ce que** la boisson est alcoolisée.

7. Boisson artificiellement gazéifiée selon l'une quelconque des revendications 1 à 5, **caractérisée en ce que** la boisson comprend de la caféine et comprend éventuellement de la taurine.

8. Boisson artificiellement gazéifiée selon l'une quelconque des revendications précédentes, dans laquelle le composé de tétraglycérol est le principal composé présent selon la plus grande proportion en poids dans le composant de polyglycérol b1).

9. Conteneur scellé contenant une boisson artificiellement gazéifiée selon l'une quelconque des revendications précédentes.

10. Méthode de préparation d'une boisson selon l'une quelconque des revendications 1 à 8, la méthode comprenant les étapes consistant à :
1) réagir :
a) un triglycéride, et b) un alcool polyhydrique qui comprend :
b1) un polyglycérol ayant au moins 3 motifs glycérol, comprenant 25-50% en poids de triglycérol, 25-50% en poids de tétraglycérol, 15-40% en poids de polyglycérols supérieurs, et pas plus de 20% en poids d'autres composés, où le composé de tétraglycérol est présent dans le composant de polyglycérol b1) selon une quantité supérieure en poids par rapport au composé de pentaglycérol ; et
b2) du glycérol libéré à partir du triglycéride dans la réaction d'estérification ;
afin de fournir un produit de réaction d'estérification ; et
2) ajouter le produit de réaction d'estérification à une base de boisson selon une quantité allant jusqu'à 20 mg/l.

11. Utilisation, à des fins de réduction du moussage et d'amélioration de la rétention du dioxyde de carbone dans une boisson artificiellement gazéifiée, d'un mélange d'esters d'acides gras et de polyglycérol ; où le mélange d'esters d'acides gras et de polyglycérol est constitué :
du produit de réaction d'estérification a) d'un triglycéride, et b) d'un alcool polyhydrique qui comprend : b1) un polyglycérol ayant au moins 3 motifs glycérol, et b2) du glycérol libéré à partir du triglycéride dans la réaction d'estérification ; et
où le mélange d'esters d'acides gras et de polyglycérol est présent dans la boisson selon une quantité allant jusqu'à 20 mg/l.

12. Utilisation d'un mélange d'esters d'acides gras et de polyglycérol dans une boisson gazéifiée, afin de produire a) une rétention améliorée du dioxyde de carbone dans la boisson et b) une mousse à rupture rapide ; où le mélange d'esters d'acides gras et de polyglycérol est constitué :
du produit de réaction d'estérification a) d'un triglycéride, et b) d'un alcool polyhydrique qui comprend : b1) un polyglycérol ayant au moins 3 motifs glycérol, et b2) du glycérol libéré à partir du triglycéride dans la réaction d'estérification ; et
où le mélange d'esters d'acides gras et de polyglycérol est présent dans la boisson selon une quantité allant jusqu'à 20 mg/l.
